# EUROPEAN PATENT APPLICATION

(11) **EP 3 112 910 A1**
(43) Date of publication of application: **04.01.2017**
(21) Application number: 15306022.3
(22) Date of filing: 29.06.2015
(51) Int. Cl.: G02B 5/28, G02C 7/10

(54) **OPTICAL FILTER**

(71) Applicant: ESSILOR INTERNATIONAL (Compagnie Générale d'Optique), 94220 Charenton-le-Pont (FR)
(72) Inventor: MARCK, Christelle, 94227 CHARENTON LE PONT cedex (FR); POPHILLAT, Olivier, 94227 CHARENTON LE PONT cedex (FR); ZHANG, Xiaohong, DALLAS, TX Texas 75034 (US)
(74) Representative: Korakis-Ménager, Sophie

(57) **Abstract**

Ophthalmic lens comprising a substrate and at least one organic multilayer optical filter having a first reflection band with a FWHM W 1 comprised in the range of [780nm-2000nm], a second reflection band with a FWHM Wn comprised in the range of [260nm-460nm], and Wn/W1 ratio is smaller than or equal to 0.5.

## Description

### Field of the invention

The present invention relates to optical filters having several selective reflection bands. Such filters may be laid on ophthalmic lenses, especially on spectacle lenses.

### Background of the invention

Optical filters are of great importance in everyday life. With filters, one can select and control which wavelength of the electromagnetic spectrum will be allowed to go through a material, or not.

In the near infra red (NIR) electromagnetic range (from 780nm to 3µm), filters allow for heat transfer control for instance.

In the visible light (VIS) electromagnetic range (from 380nm to 780nm), filters may be used to control intensity of light, or colour of light. In some cases, specific light wavelengths are linked to biologic processes (melatonin secretion, circadian rhythm regulation, eye diseases...) or vision efficiency (contrast, low intensity perception, dyschromatopsia...).

In the ultra violet (UV) electromagnetic range (from 280nm to 380nm), light has a high energy and may degrade living cells and chemicals bonds. Filters are required to protect health of people and improve ageing properties of materials.

In the following, the term light will be used for NIR, VIS and UV electromagnetic range.

To design an optical system, one has to take into account all specifications in light transmission and/or reflection, and very often, several filters are used simultaneously.

In the following, the width of a filter will be defined as the Full Width at Half Maximum (FWHM).

Several technologies are used to make filters. Absorption filters include moieties (dyes and/or pigments usually) which absorbs light with a given wavelength band, this band is usually large and not very selective. Interferential filters are based on multilayered materials. By a precise design of the nature, thickness and number of layers, one can obtain a filter with a specific light reflection spectrum. High selectivity is obtained with a large number of layers. These filters can be based on inorganic or organic layers.

Finally, optical systems often comprise many different optical filters, yielding interaction problems between filters (both optically and mechanically), overal thickness increase and requiring multistep and complex fabrication procedures.

Actually, there is still a need for selective filters on several bands of light that could be designed without superposition of simple filters.

### State of the art

An optical film is disclosed in WO2014022049 to simultaneously protect a material against UV degradation and reflect light in a portion of visible light. This film is made by superposition of two distinct multilayered optical films (MOF).

By superposition of two multilayered optical filters having both multiple orders of interference, US2013250405 discloses a broad band reflection mirror used in displays or light guides. Actually, the transmission bands of the first MOF correspond to reflection bands of the second MOF. Globally, these two superposed filters behave like a single mirror covering the whole visible light spectrum. Such a system fails to teach how to design a single selective filter for ophthalmic lenses.

The use of several orders of interference is disclosed in US4896928, in which only first and third order of interference are effective, based on an inorganic (metal oxide) interferential stack. The stack is not periodic and has a limited number of layers (below 40). It yields a spectrum with two reflection bands. However, the third order of reflection is not selective and present large "shoulders" in the visible light range. Such a filter is not selective enough as it fails to reflect UV without reflecting visible light in the range [380nm-500nm].

### Object of the Invention

An object of the invention is to use high order reflection bands in interferential multilayered organic filters.

Multilayered Optical Films (MOF) present a periodic alternated structure of at least two different polymeric materials whose refractive index are slightly different. MOF generally comprise hundreds of layers. By proper choice of refractive index, relative thickness of both materials and number of layers, very selective filters can be designed. In addition, the FWHM of these filters can be selected.

In such an interferential structure, basic optical science teaches that several interference orders appear. The longest wavelength λ₀ for which interference is obtained defines the first order. Interferences are also obtained for shorter wavelengths defining higher orders of interference. For n^{th} order, the wavelength is λ₀/n if the refractive index is constant over the wavelength. If the width of the first order interference band is Wo, then the maximum width of n^{th} order is W₀/n. Last, depending on the interferential structure, some orders of interference may be cancelled or attenuated.

Finally, incident light will be reflected in the interference bands and transmitted outside these bands. In the following, a reflection band refers to a wavelength range of light which is partially or totally reflected by interference effects of multilayered optical films.

If a MOF is properly designed, it may exhibit several reflection bands in the light range and allow for complex and selective filtering, while using only one filter.

Other multilayered systems suitable for the invention are cholesteric structures. Cholesteric liquid crystals, also known as chiral nematic phases, comprise a stack of layers of a unique material. In each layer, a nematic order is in place. From one layer to the next one, the nematic order direction twists. A full 360° twist is obtained for a specific thickness of material, defining a characteristic length in the multilayered system. Such filters exhibit regular ordering in two directions and are described in US2012320306.

Other multilayered systems suitable for the invention are photonic crystals. Photonic crystals are ordered one, two or three dimensional networks of objects having a refractive index different from the matrix (i.e. continuous phase, which may be organic material, gas/air or vacuum) in which they are dispersed. These materials provide with very selective filters, and present high orders of interference.

The invention therefore relates to an ophthalmic lens comprising a substrate and at least one organic multilayer optical filter F1, characterized in that
▪ F1 has a reflection band B1 with a FWHM W1 comprised in the range of [780nm-2000nm],
▪ F1 has a reflection band Bn with a FWHM Wn comprised in the range of [260nm-460nm], and
▪ Wn/W1 ratio is smaller than or equal to 0.5.

In a specific embodiment, the reflection band Bn has a FWHM Wn comprised in the range of [400nm-460nm], allowing for attenuation of blue light transmission.

In another embodiment, the reflection band Bn has a FWHM Wn comprised in the range of [300nm-400nm], allowing for attenuation of UV-Deep blue light transmission.

### Figure description

Figure 1 shows the transmittance (%) versus light wavelength of a multilayered optical film (PET/PMMA)⁴⁹PET on MR8 substrate having three orders of interference. λ₁=1290nm for 1^{st} order, λ₁/3=430nm for 3^{rd} order, n=3, Optical thickness of PET/PMMA at λ₃=430nm is 645nm, f-ratio=0.46.
Figure 2 compares transmittance (%) versus light wavelength of multilayered optical films (PET/PMMA)²⁴PET on MR8 substrate having different f-ratio.
   f=1/6 (solid line): PMMA physical thickness=63nm-PET physical thickness=354 nm
   f=1/10 (dotted line): PMMA physical thickness=38nm-PET physical thickness=383 nm
Figure 3 shows transmittance (%) versus light wavelength of a multilayered optical film (PET/PMMA)⁴⁰⁰PET on PET like substrate with no UV absorption, whose second order of interference is cancelled with the choice of f-ratio=0.5. Thickness of PET increases linearly from 118nm to 174nm and thickness of PMMA increases linearly from 131nm to 193nm.

### Detailed description

In the present invention, an ophthalmic lens is an optical element disposed on or near the eye of a wearer and aims at correcting wearer's vision, protecting wearer's eyes and/or enhance wearer's vision. Non limiting examples of ophthalmic lenses include non-corrective (also called plano or afocal lens) and corrective lenses, including single vision or multi-vision lenses like bifocal, trifocal or progressive lenses, which may be either segmented or non-segmented. Ophthalmic lenses may be semi-finished lenses or finished lenses.

The ophthalmic lens according to the invention comprises a substrate and at least one organic multilayer optical filter.

The substrate can be of any type used in ophthalmic industry, including mineral glass or organic substrate.

Organic substrate may be a thermoplastic material, selected from, for instance: polyamides; polyimide; polysulfones; polycarbonates, polyurethanes and copolymers thereof; poly(ethylene terephtalate) and polymethylmethacrylate (PMMA).

As used herein, a polycarbonate (PC) is intended to mean either homopolycarbonates or copolycarbonates or block copolycarbonates.

Organic substrate may be also a thermoset material, selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phtalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (co)polymer is intended to mean a copolymer or a polymer. As used herein, a (meth)acrylate is intended to mean an acrylate or a methacrylate.

Particularly recommended substrates include those substrates obtained through (co)polymerization of the diethyleneglycol bis-allyl-carbonate, marketed, for example, under the trade name CR-39® by the PPG Industries company (ORMA® lenses, ESSILOR), or polythiourethanes/polysuflide, marketed for instance under MR series by Mitsui, or allylic and (meth)acrylic copolymers, having a refractive index between 1,54 and 1,58.

Organic multilayer optical filter can be of various structures and are well known in the industry.

Photonic crystals are ordered one, two or three dimensional networks of objects having a refractive index different from the matrix (which may be air or vacuum) in which they are dispersed. These materials provide with very selective filters, and present high orders of interference. By proper selection of objects size, refractive index and spacing, one can design a filter with well defined main interference band width, attenuation of interference bands and transmittance values.

Cholesteric liquid crystals, also known as chiral nematic phases, comprise a stack of layers of a unique material. In each layer, a nematic order is in place. From one layer to the next one, the nematic order direction twists. A full 360° twist is obtained for a specific thickness of material, defining a characteristic length in the multilayered system. By proper selection of full twist thickness and refractive index, one can design a filter with well defined main interference band width, attenuation of interference bands and transmittance values.

Most popular organic multilayer optical filters are known as Multilayerd Optical Filters (MOFs) in the industry. MOFs are periodic alternated structures of at least two different polymeric materials whose refractive index are different. MOFs generally comprise hundreds of layers. By proper choice of refractive index, relative thickness of both materials and number of layers, very selective filters can be designed showing well defined main interference band width, attenuation of interference bands and transmittance values. A comprehensive description of MOFs can be found in Alfrey, Jr. et al., "Physics Optics of Iridescent Multilayered Plastic Films", Polymer Engineering and Science, vol. 9, No. 6, p. 400-404 (Nov. 1969) or in US3711176 patent.

MOFs filters are properly defined by the following parameters: refractive indices of polymeric materials used, optical thickness (OT) and f-ratio.

Many polymeric materials may be used in MOFs.

Polyester materials like dicarboxylic acid polyesters are suitable. Polyethylene terephthalate ("PET"), polyethylene naphthalate ("PEN") or a copolymer derived from ethylene glycol, naphthalene dicarboxylic acid, and terephthalic acid may be used. These polyesters have a refractive index around 1.64-1.65.

Poly(meth)acrylic materials are also suitable. These poly(meth)acrylates have a refractive index around 1.48-1.50. Polymethylmethacrylate (PMMA) is particularly suitable for the invention.

Other polymers like polyolefins, polyvinyls especially polystyrene (PS) with a refractive index around 1.57-1.60 or fluoropolymers may be used.

In MOFs, two successive layers of different polymer are the elementary periodic element of the filter. Optical thickness of MOFs is defined as the total optical thickness of such two successive layers at a reference wavelength. Finally, the optical thickness ratio of one polymer as compared to the optical thickness of the filter is defined as the f-ratio. f-ratio mainly defines how interference orders are attenuated. For f-ratio=1/4, second order is maximum whereas for f-ratio=1/2, second order is cancelled. Third order is maximum for f-ratio=1/6 or 1/2 and cancelled for f-ratio=1/3.

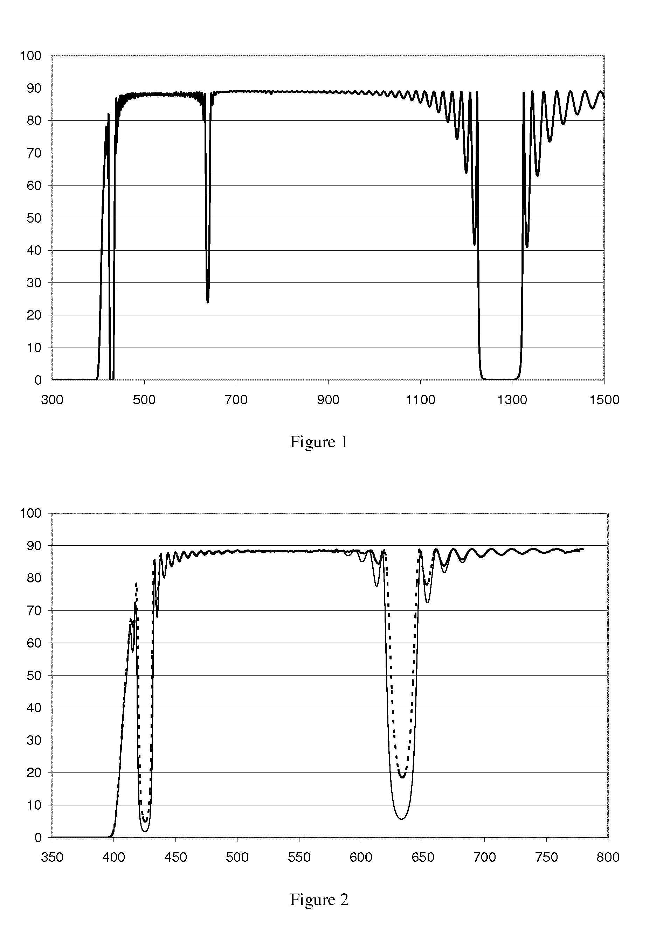

For instance, (PET/PMMA)⁴⁹PET, Optical thickness=0.5nλₙ at wavelength λₙ (At n=3, λ₃=430nm,optical thickness=0.5x3x430nm=645nm),f-ratio=0.46 defines a MOF with a stack of 99 alternating PET (thickness d_{PET}, refractive index n_{PET}) and PMMA (thickness d_{PMMA}, refractive index n_{PMMA}). At the outmost layers, two optically thick layers can be added to provide good mechanical properties. Optical thickness is OT= d_{PET}.n_{PET}+d_{PMMA}.n_{PMMA} with λₙ chosen between 280nm and 500nm usually. Finally, f-ratio= d_{PET}.n_{PET}/OT. Figure 1 present the transmittance curve of this MOF filter, with λₙ=430nm, n=3.

In some cases, PET/PMMA bilayers have not the same thickness in all stack, but a linearly increasing thickness, defined by a slope.. Two materials can have the same or slightly different thickness slope. Slopes are defined for PET as (d_{PET} (last layer)-d_{PET}(first layer))/total PET layer number and for PMMA as (d_{PMMA} (last layer)-d_{PMMA}(first layer))/total PMMA layer number

According to the invention, multilayered optical filter F1 presents at least two reflection bands B1 and Bn having respectively a FWHM W1 comprised in the range of [780nm-2000nm] and a FWHM Wn comprised in the range of [260nm-460nm]. The width of reflection bands Wn is smaller than W1 and Wn/W1 ratio is smaller than or equal to 0.5.

In a specific embodiment, reflection bands B1 and Bn may be respectively the first and n^{th} order of interference obtained with one single multilayer optical filter. In particular, reflection band Bn is of order n, with n equal to or larger than 3.

In addition, reflection band Bn may have a maximum reflection value higher than or equal to 25%, so as to filter out a quantitative amount of undesirable light.

Furthermore, reflection band Bn may have a luminous reflectance at 460nm lower than or equal to 25%, to ensure that visible light is not reflected in such a way that colour perception of transmitted light through the ophthalmic lens would be altered in an unacceptable manner.

Ophthalmic lens according to invention has a total luminous transmittance higher than or equal to 20%, preferably higher than or equal to 50%, more preferably higher than or equal to 80%. Luminous transmittance Tv (also called "relative light transmission factor in the visible spectrum") is defined in the standard ISO 13666:1998 and is measured according to the standard ISO 8980-3 (from 380 to 780 nm).

In a first aspect of the invention, the reflection band Bn has a FWHM Wn comprised in the range of [400nm-460nm]. This range of wavelength corresponds to visible blue light which may cause retinal damage or contribute to the development of early and late Age-Related Maculopathy (ARM), such as Age-related Macular Degeneration (AMD). Then, the ophthalmic lens according to the invention provides a protection against blue light, defined as the average transmittance TmB of the ophthalmic lens over the range 420-450 nm.

Ophthalmic lenses according to the invention may have average transmittance TmB lower than 80%, lower than 60% or lower than 35%.

In terms of colour perception, filtering out a part of blue light yields a transmitted light of yellow appearance, which may be not comfortable or aesthetic for the wearer. Yellowness Index (YI) is a characterization of this yellow appearance, and should be as low (in absolute value) as possible. YI is characterized according to ASTM E313. It can be determined from the CIE tristimulus values X, Y, Z through the relation: YI=(128X- 106 Z) / Y.

Here, YI of light transmitted through the ophthalmic lens according to the invention should be minimal. To obtain a low YI, colour balancing may be provided by filtering out a part of yellow light to restore the perceived balance of light.

In a specific embodiment, the multilayer optical filter has another reflection band Bm with a FWHM Wm comprised in the range of [570nm-690nm], with a maximum reflection value higher than or equal to 25%. This reflection band Bm may be a reflection band of lower order of interference than the reflection band Bn.

Table 1 shows possible reflection bands central positions for multilayered optical films providing a good protection against blue light and in the same time a colour balancing performance assuming the refractive index of the polymers are constant over the wavelength range:

**Table 1**

| First (central) order | Bm (2^{nd} order) in range 570nm-690nm | Bn (3^{rd} order) in range 400nm-460nm |
|---|---|---|
| 1250 | 625 | 416,7 |
| 1260 | 630 | 420 |
| 1270 | 635 | 423,3 |
| 1280 | 640 | 426,7 |
| 1290 | 645 | 430 |
| 1300 | 650 | 433,3 |
| 1310 | 655 | 436, 7 |
| 1320 | 660 | 440 |
| 1330 | 665 | 443,3 |
| 1340 | 670 | 446, 7 |

Table 2 shows other possible reflection bands central positions for multilayered optical films providing a good protection against blue light and in the same time a colour balancing performance assuming the refractive index of the polymers are constant over the wavelength range:

**Table 2**

| First (central) order | 2^{nd} order outside visible range | Bm (3^{rd} order) in range 570nm-690nm | Bn (4th order) in range 400nm-460nm |
|---|---|---|---|
| 1710 | 855 | 570 | 427,5 |
| 1720 | 860 | 573,333333 | 430 |
| 1730 | 865 | 576,666667 | 432,5 |
| 1740 | 870 | 580 | 435 |
| 1800 | 900 | 600 | 450 |
| 1810 | 905 | 603,333333 | 452,5 |

In a specific embodiment, light transmitted through the ophthalmic lens according to the invention has a Yellowness Index (YI) lower than or equal to 20, preferably lower than or equal to 10, ideally lower than or equal to 5.

Colour perception is not only important for comfort or aesthetic, but also in driving requirements. To be able to see correctly signal lights, ophthalmic lenses should respect ISO 8990-3 2013 requirements, namely
▪ Luminous transmittance (Tv) higher than 80% for clear lenses (class 0).
▪ Four ratios (Quotients) defined for specific colours: Qred>0.8, Qyellow>0.6, Qgreen>0.6 and Qblue>0.4
▪ The minimal transmittance over the band [475-650] nm higher than 0.2Tv

In the invention, if the optional reflexion band comprised in the range [570-690] nm is present, light corresponding to Qred ratio is reflected. Actually, only Qred ratio is difficult to achieve. Other ratios (yellow, green and blue) are always satisfied.

In a specific embodiment, ophthalmic lens according to the invention present relative visual attenuation coefficients, for recognition/detection of incandescent signal lights which are not less than 0.8 for Qred, 0.6 for Qyellow, 0.6 for Qgreen, and 0.4 for Qblue.

In a second aspect of the invention, the reflection band Bn has a FWHM Wn comprised in the range of [300nm-400nm], preferably [300nm-380nm]. This wavelength range corresponds to deep blue light and UV light. UVA band ranging from 315nm to 380nm and UVB band ranging from 280nm to 315nm are particularly harmful to the retina.

The protection given by ophthalmic lenses towards UV may be measured with UV transmittance Tuv through ophthalmic lens, as defined in International Standard ISO 13666.

According to a specific embodiment of the invention, ultraviolet light transmitted through the ophthalmic lens Tuv is lower than or equal to 5%, preferably lower than or equal to 1%.

In addition to the reflection band Bn, reflection band B1 of multilayered optical filter can provide protection against infrared light. Infrared radiation (IR) lies beyond the visible spectrum with wavelength range between 780nm to 10um. It can be divided into three sub-regions:
IR-A, or near infrared (NIR): from 780nm to 1400nm
IR-B or far infrared (FIR): from 1400nm to 3000nm.
IR-C (3um to 10 um): solar radiation absorbed by the earth atmosphere.

Most solar irradiance lies in IR-A region from 780nm to 1400nm. These IR rays can transmit through the ocular media (i.e. cornea, lens, aqueous, iris) to the retina and are absorbed by retinal pigment epithelium. It can cause structural retinal damage due to the heating effects.

In a specific embodiment, multilayered optical filter according to the invention has a reflection band B1 with a FWHM W1 comprised in the range of [780nm-2000nm], preferably [780nm-1400nm].

The protection given by ophthalmic lenses towards IR-A may be measured with IR transmittance T_{SIR} through ophthalmic lens, as defined in International Standard ISO 1231:2013(E) (Personal protective equipment-Test methods for sunglasses and related eyewear).

In certain embodiments, ophthalmic lenses have infrared transmittance T_{SIR} lower than or equal to 50%, preferably lower than or equal to 25%.

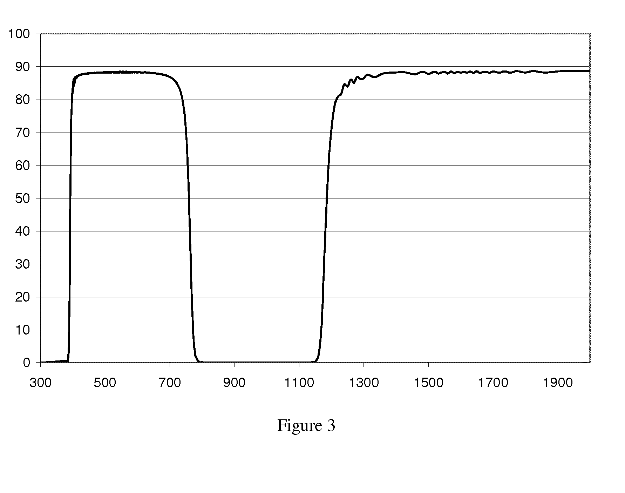

Figure 3 shows the transmittance curve of (PET/PMMA)⁴⁰⁰PET multilayered optical film with thickness of PET increasing linearly from 118nm to 174nm, thickness of PMMA increasing linearly from 131nm to 193nm and f-ratio is 0.5. The multilayered structure could be sandwiched between two optically thick polymer layers for mechanical protection. The layers could be PET. In this case, the second order of interference is cancelled. With such a filter, UV light in the range from 300nm to 380nm is not transmitted, and IR light in the range from 780nm to 1150nm is not transmitted. In the visible range from 380nm to 780nm, transmittance is roughly 90%.

In addition, the position of the reflection band Bn may be adjusted to reflect strongly UV light without having impact on visible light. In such specific embodiment ophthalmic lens has a Yellowness Index lower than or equal to 15, preferably lower than or equal to 5.

On figure 3, one can see that in the visible range from 380nm to 780nm, luminous transmittance Tᵥ is roughly 90% and uniform. As a consequence, Yellowness Index of transmitted light through this filter is very low, YI=0.82, providing for a neutral filter in terms of colour perception.

According to the invention, organic multilayer optical filter may be glued on the front face and/or on the rear face of the substrate. If organic multilayer optical filters are glued on both faces, these organic multilayer optical filters may be same or different.

The organic multilayer optical filter may be deposited directly onto a bare substrate. In some applications, the substrate is coated with one or more functional coatings prior to depositing the organic multilayer optical filter of the invention. In other applications, one or more functional coatings are coated on the organic multilayer optical filter. These functional coatings traditionally used in optics may be, without limitation, an impact-resistant primer layer, an abrasion-resistant coating and/or a scratch-resistant coating, a polarizing coating, a photochromic coating or a tinted coating.

Coatings capable of modifying the surface properties, such as hydrophobic and/or oleophobic coatings (antifouling, antistain, antifog), may also be deposited onto the outer layer of the last functional coating.

The organic multilayer optical filter may be laminated on the substrate, said substrate eventually bearing functional layers, by lamination process as taught in EP1866144.

Typically, an ophthalmic lens according to the invention comprises a substrate that is successively covered on its front face with an organic multilayer optical filter according to the invention, then an impact-resistant primer layer, an abrasion-resistant layer and/or a scratch-resistant layer, an antireflective layer and finally with a hydrophobic and/or oleophobic coating.

### Examples

Seven ophthalmic lenses (L1 to L7) have been prepared according to the first aspect of the invention. Table 3 presents structure and performance of these lenses.

**Table 3**

| Lens | L1 | L2 | L3 | L4 | L5 | L6 | L7 |
|---|---|---|---|---|---|---|---|
| Substrate | MR8 | MR8 | MR8 | MR8 | MR8 | MR8 | MR8 |
| Multilayered Optical Film | (PET/PMMA)²⁴PET | (PET/PMMA)²⁴PET | (PET/PMMA)⁴⁹PET | (PET/PMMA)⁴⁹PET | (PET/PMMA)²⁴PET | (PET/PMMA)⁴⁹PET | (PET/PMMA)²⁴PET |
| Optical thickness at λₙ (=0.5n λₙ) | 637.5nm | 637.5nm | 637.5nm | 637.5nm | 652.5nm | 645nm | 652.5nm |
| f-ratio | 1/6 | 1/10 | 0.46 | 0.44 | 1/10 | 0.46 | 1/6 |
| Slope | None | None | None | 0.0003 | None | None | None |
| Center wavelength (λ₁) of reflection band B 1 | 1263nm | 1265nm | 1257nm | 1260nm | 1295nm | 1273nm | 1293 |
| FWHM of reflection band B1 (W1) | 71nm | 57nm | 87nm | 97nm | 58nm | 98nm | 72nm |
| Center wavelength (λₙ) of reflection band Bn | 425nm | 425nm | 425nm | 425nm | 435 nm | 430 nm | 435 nm |
| FWHM of reflection band Bn (Wn) | 14nm | 12nm | 14 nm | 21 nm | 12nm | 14nm | 14 nm |
| Center wavelength (λₘ) of reflection band Bm | 633nm | 633nm | 631nm | 631nm | 648nm | 638nm | 648nm |
| FWHM of reflection band Bm (Wm) | 25nm | 19nm | 10 nm | 20 nm | 20nm | 10nm | 26 nm |
| Wn/W1 | 0.20 | 0.21 | 0.16 | 0.22 | 0.21 | 0.14 | 0.19 |
| Tv% | 84% | 86% | 87% | 85% | 87% | 87% | 86% |
| TmB% (420nm-450nm) | 53% | 57% | 54% | 44% | 56% | 51% | 49% |
| Yellowness Index | -1 | 3 | 9 | 9 | 14 | 14 | 13 |
| Qred | 0.75 | 0.86 | 0.90 | 0.83 | 0.91 | 0.94 | 0.86 |
| Tmin% [475-650]nm | 6% | 18% | 24% | 22% | 18% | 24% | 5% |
| Driving requirements | FAIL | PASS | PASS | PASS | PASS | PASS | FAIL |

Due to the dispersive nature of refractive index of the polymer materials over wavelength, the relationship between the nth order band and the 1st order (main) order doesn't exactly follow λₙ=λ₁/n. For example, for L1, 3^{rd} order band centers at 425nm, but 2^{nd} order band centers at 633nm instead of 637.5nm (0.5*3*425nm).

It can be observed that lenses L2 to L6 all present good protection against blue light: TmB is lower than 60%, without impacting strongly colour perception: YI<15 and often YI<10; nor traffic light perception.

For lenses L1 and L7, blue control and colour perception performances are met, but low transmittance in the [465-650]nm doesn't fulfill driving requirements.

Lenses L11 and L12 have been prepared according to the second aspect of the invention. Table 4 presents structure and performance of these lenses.

**Table 4**

| Lens | L11 | L12 |
|---|---|---|
| Substrate | PET like with no UV absorption | PET like with no UV absorption |
| Multilayered Optical Film | (PET/PMMA)⁴⁰⁰PET | (PET/PMMA)⁵⁰⁰PET |
| Optical thickness at reference wavelength 780nm for first PET/PMMA bilayer | 390nm | 390nm |
| f-ratio | 0.5 | 1/2 |
| | 0.155 for PMMA | 0.191 for PMMA |
| Slope | 0.140 for PET | 0.172 for PET |
| Center wavelength of reflection band Bn | 357nm | 450nm |
| FWHM of reflection band Bn | 74nm | 142nm |
| Center wavelength of reflection band B 1 | 970nm | 1066 nm |
| FWHM of reflection band B1 | 424nm | 622 nm |
| Wn/W1 | 0.17 | 0.23 |
| Tuv% | 0% | 0.3% |
| T_{SIR}% | 27% | 14% |
| TmB%(420-450nm) | 88% | 1% |
| Yellowness Index | 0.83 | 55 |

The filters are laminated on a non absorptive lens substrates in UV range where the substrate's refractive index is similar to that of PET. Lenses L11 and L12 show a very good protection against UV and IR lights. In addition, lens L11 has a very low impact on colour perception: YI=0.83, whereas lens L12 provides an enhanced protection against blue light: TmB=1%, but with a strong colour impact.

## Claims

1. Ophthalmic lens comprising
▪ a substrate,
▪ at least one organic multilayer optical filter F1,
**characterized in that**
▪ F1 has a reflection band B1 with a FWHM W1 comprised in the range of [780nm-2000nm],
▪ F1 has a reflection band Bn with a FWHM Wn comprised in the range of [260nm-460nm], and
▪ Wn/W1 ratio is smaller than or equal to 0.5.

2. Ophthalmic lens according to claim 1, **characterized in that** said reflection band Bn is of order n, with n equal to or larger than 3.

3. Ophthalmic lens according to claim 1 or claim 2, **characterized in that** said reflection band Bn has a maximum reflection value higher than or equal to 25%.

4. Ophthalmic lens according to any one of claim 1 to claim 3, **characterized in that** total luminous transmittance of the ophthalmic lens is higher than or equal to 20%, preferably higher than or equal to 50%, more preferably higher than or equal to 80%

5. Ophthalmic lens according to any one of claim 1 to claim 4, **characterized in that** said reflection band Bn has a FWHM Wn comprised in the range of [400nm-460nm].

6. Ophthalmic lens according to any one of claim 1 to claim 5, **characterized in that** said organic multilayer optical filter has a luminous reflectance at 460nm lower than or equal to 25%.

7. Ophthalmic lens according to any one of claim 1 to claim 6, **characterized in that** the average transmittance TmB over the range 420-450 nm is lower than 80%, preferably lower than 60%, more preferably lower than 35%.

8. Ophthalmic lens according to any one of claim 1 to claim 7, **characterized in that** said multilayer optical filter has a third reflection band Bm with a FWHM Wm comprised in the range of [570nm-690nm], with a maximum reflection value higher than or equal to 25%.

9. Ophthalmic lens according to any one of claim 1 to claim 8, **characterized in that** the light transmitted through the ophthalmic lens has a Yellowness Index lower than or equal to 20, preferably lower than or equal to 10, ideally lower than or equal to 5.

10. Ophthalmic lens according to any one of claim 1 to claim 9, **characterized in that** relative visual attenuation coefficients, for recognition/detection of incandescent signal lights, are not less than 0.8 for Qred, 0.6 for Qyellow, 0.6 for Qgreen, and 0.4 for Qblue.

11. Ophthalmic lens according to any one of claim 1 to claim 4, **characterized in that** said reflection band Bn has a FWHM Wn comprised in the range of [300nm-400nm], preferably [300nm-380nm].

12. Ophthalmic lens according to claim 11, **characterized in that** the ultraviolet light transmitted through the ophthalmic lens Tuv is lower than or equal to 5%, preferably lower than or equal to 1%.

13. Ophthalmic lens according to claim 11 or 12, **characterized in that** said reflection band B1 has a FWHM W1 comprised in the range of [780nm-1400nm].

14. Ophthalmic lens according to anyone of claim 11 to 13, **characterized in that** the infrared transmittance Tsar is lower than or equal to 50%, preferably lower than or equal to 25%.

15. Ophthalmic lens according to anyone of claim 11 to 14, **characterized in that** the ophthalmic lens has a Yellowness Index lower than or equal to 15, preferably lower than or equal to 5.
